# DEMANDE DE BREVET EUROPEEN

(11) **EP 2 357 055 A1**
(43) Date de publication de la demande: **17.08.2011**
(21) Numéro de dépôt: 11153218.0
(22) Date de dépôt: 03.02.2011
(51) Int. Cl.: B23K 9/02, B23K 9/08, B23K 9/167, B23K 9/29

(54) **Procédé de soudage à l'arc TIG avec fil d'apport fusible en présence d'un chanfrein étroit et application d'un champ magnétique**

(30) Priorité: 11.02.2010 FR 1050968
(71) Demandeur: L'AIR LIQUIDE, Société Anonyme pour l'Etude et l'Exploitation des Procédés Georges Claude, 75007 Paris (FR); AIR LIQUIDE WELDING FRANCE, 75007 Paris (FR)
(72) Inventeur: Burvelle, Nicolas, 95520 Osny (FR); Fortain, Jean-Marie, 95520 Osny (FR); Gadrey, Sébastien, 58230 Gouloux (FR); Planckaert, Jean-Pierre, 78700 Conflans Sainte Honorine (FR)
(74) Mandataire: Pittis, Olivier

(57) **Abrégé**

L'invention porte sur un procédé de soudage à l'arc TIG avec fil (5) d'apport fusible, dans lequel; <a-> on crée un arc électrique (10) entre une électrode non fusible (2) et au moins une pièce métallique à souder; <b-> on guide un fil fusible (5) vers une zone de fusion située à proximité immédiate de l'extrémité (2a) de l'électrode de sorte que le fil fusible (5) pénètre dans la zone de fusion selon une direction (5b) selon un angle (α) compris entre 5 et 50° ; et <c-> on déplace l'électrode non fusible (2) et le fil fusible (5) de manière à opérer une fusion progressive du fil (5) et à apporter ainsi du métal fondu au niveau du bain de fusion qui se solidifie en au moins un cordon de soudure. La ou les pièces métalliques à souder présentent un chanfrein étroit dans lequel est déposé le métal fondu en plusieurs passes successives, un cordon de soudure étant formé durant chaque passe. On applique par ailleurs, pendant au moins une partie de l'étape <c-> un champ magnétique (B) audit arc électrique de manière à dévier uniquement l'arc électrique.

## Description

L'invention concerne un procédé de soudage à l'arc avec fil d'apport fusible adapté au soudage des chanfreins étroits.

Dans les procédés TIG (en anglais : *Tungsten Inert Gas),* une électrode en tungstène non fusible est utilisée pour créer un arc électrique. Cet arc chauffé les pièces à souder. Une atmosphère protectrice entoure les pièces à souder. Du métal est éventuellement apporté sous la forme d'un fil fusible. Celui-ci fond dans bain de soudure chauffé par l'arc électrique et situé au niveau des pièces à souder. Le bain, en se refroidissant, forme un cordon de soudure.

Par ailleurs, le document EP-A-1459831 décrit un procédé, appelé « TOPTIG », dans lequel le métal d'apport n'est pas fondu dans le bain de métal en fusion au niveau des pièces à souder, mais dans l'arc électrique. Plus précisément, le fil fusible vient frôler la pointe de l'électrode. Il arrive dans sa zone de fusion située à proximité immédiate de la pointe de l'électrode en suivant une direction formant un angle compris entre 5 et 50 degrés avec la direction de l'électrode. Le fil fondu rejoint le bain de métal liquide par gouttelettes ou par un pont liquide suivant la direction de l'arc électrique.

Afin d'améliorer la qualité de la soudure, il est connu d'augmenter la largeur du cordon de soudage. Ceci peut se faire en augmentant la taille du bain de métal, mais cela peut poser des problèmes liés à la gravité : le bain peut couler ou tomber. Il est également connu de réaliser un balayage mécanique en imprimant des mouvements tels qu'un va et viens à la torche de soudage, mais ceci n'est pas adapté dès lors que les contraintes d'encombrement deviennent importantes, notamment en chanfrein étroit.

On parle de chanfrein étroit (en anglais : *narrow gap)* lorsque les bords de la ou des pièces à souder forment une gorge étroite. Dans une telle configuration, il est délicat d'apporter du métal supplémentaire au niveau de la soudure, c'est-à-dire dans le chanfrein en question. Le procédé TIG a donc été adapté à cette configuration en modifiant la manière d'apporter le métal supplémentaire.

Le problème à résoudre est dès lors de réaliser des soudures efficaces en chanfrein étroit par un procédé TIG, notamment sous contrainte d'encombrement, de gravité s'exerçant sur le métal en fusion et sans perturber la fusion du métal d'apport.

La solution de l'invention est alors un procédé de soudage à l'arc TIG avec fil d'apport fusible, comprenant les étapes suivantes :
a) on crée un arc électrique entre une électrode non fusible ayant une extrémité libre et au moins une pièce métallique à souder, c'est-à-dire que l'arc électrique se développe depuis une extrémité libre de l'électrode non fusible vers ladite au moins une pièce métallique à souder;
b) ladite extrémité libre pointant dans une direction donnée, on guide au moins un fil fusible vers une zone de fusion située à proximité immédiate de ladite extrémité libre, ledit fil fusible pénétrant dans ladite zone de fusion selon une direction formant avec ladite direction donnée un angle (α) compris entre 5 et 50°; et
c) on déplace ladite électrode non fusible et ledit fil fusible de manière à opérer une fusion progressive du fil et à apporter ainsi du métal fondu au niveau du bain de fusion qui se solidifie en au moins un cordon de soudure,
   caractérisé en ce que :
   - ladite au moins une pièce métallique à souder présente un chanfrein étroit dans lequel est déposé le métal fondu en plusieurs passes successives, un cordon de soudure étant formé durant chaque passe, et
   - il comprend en outre une étape d) où l'on applique, pendant au moins une partie de l'étape c), un champ magnétique audit arc électrique de manière à dévier uniquement l'arc électrique, c'est-à-dire sans perturber la fusion du fil, ni dévier l'apport de métal fondu dans le bain de fusion.

Selon le cas, le procédé de l'invention peut comprendre l'une ou plusieurs des caractéristiques suivantes :
- on répète l'étape c) de manière à réaliser plusieurs cordons de soudure se superposant les uns aux autres.
- durant chaque étape c), on maintient constant le signe de l'intensité algébrique dudit courant.
- on change le signe de l'intensité algébrique dudit courant d'une étape c) à la suivante.
- pendant une même passe, on fait osciller l'arc électrique unilatéralement dans le chanfrein en faisant varier cycliquement l'intensité du courant entre une valeur positive (+) ou négative (-), et une valeur nulle (0), de préférence on fait osciller l'arc électrique unilatéralement pour plusieurs passes réalisées en fond de chanfrein.
- le chanfrein étroit a une largeur en fond de chanfrein comprise entre 5 et 15 mm, de préférence entre 7 et 10 mm, et la hauteur du chanfrein est comprise entre 5 mm et 40 cm, typiquement d'au moins 10 mm.
- le champ magnétique est généré par une source de champ magnétique comprenant au moins un solénoïde connecté électriquement à au moins une source de courant variable et au moins deux guides magnétiques aptes à et conçus pour guider le champ magnétique depuis ledit solénoïde vers ladite zone d'arc.
- on met en oeuvre des guides magnétiques présentant chacun une extrémité située de part et d'autre de ladite direction donnée, chacune desdites extrémités se situant à une distance d'au plus 15 mm de l'extrémité libre de l'électrode non fusible.
- pendant une passe de soudage donnée, la déviation se produit d'un côté seulement du chanfrein et son amplitude oscille en fonction des oscillations du champ magnétique.
- à l'étape b), le fil est en général guidé par des moyens mécaniques et est dévidé à un débit correspondant à l'apport de matière souhaité.
- à l'étape c), on déplace la torche de soudage, qui comprend l'électrode, le système guide fil et la source de champs magnétique, de manière à ce que le bain de métal en fusion crée un cordon, après son dépôt et sa solidification dans le chanfrein. Ce déplacement a lieu dans le sens longitudinal, suivant la ligne de soudure.
- à l'étape d), on applique un champ magnétique dans une zone où se développe tout ou partie de l'arc électrique. Les particules chargées et en mouvement dans l'arc électrique subissent la force de Lorentz et sont déviées dans une direction orthogonale à leur vecteur vitesse et au champ magnétique. Ainsi, un champ orienté parallèlement à la ligne de soudure provoque une déviation latérale. Un champ orienté orthogonalement au plan défini par la direction dans laquelle pointe l'électrode et la ligne de soudure crée une déviation dans le sens longitudinal (celui de la ligne de soudure). Dans le premier cas, l'objectif est d'obtenir un déplacement latéral du cordon de soudure et une bonne fusion du fil d'apport, sans déplacement mécanique de la torche. Dans le second cas, l'intérêt est de préchauffer la ou les pièces à souder en amont de la soudure et d'obtenir une bonne fusion du fil d'apport, sans déplacement mécanique supplémentaire par rapport à la translation de la torche.
- en régime établi, les étapes a), b), c) et d) sont concomitantes. Les étapes a), b) et d) coopèrent pour obtenir notamment la fusion du métal d'apport et son dépôt à un endroit particulier. Ceci permet d'ajuster la position et la forme du bain de fusion, donc du cordon de soudure. Cela présente un grand intérêt pour souder en chanfrein étroit.
- à l'étape d), ledit champ magnétique est variable et possède une intensité maximale comprise entre 8 et 50 gauss à l'extrémité de l'électrode.
- à l'étape d) on alimente au moins un solénoïde par un courant de manière à créer ledit champ magnétique; et on guide ledit champ magnétique depuis ledit solénoïde jusqu'au voisinage de ladite extrémité de l'électrode non fusible à l'aide d'au moins deux guides magnétiques.
- on répète l'étape c) de manière à réaliser plusieurs cordons de soudure se superposant les uns aux autres dans le chanfrein et on stoppe l'étape c), après comblement de tout ou partie du chanfrein étroit.
- ledit courant d'alimentation dudit solénoïde est périodique, de fréquence comprise entre 0.5 et 300 hertz, de préférence entre 0.5 et 10 hertz.
- ledit champ magnétique appliqué durant l'étape d) est périodique.
- ledit arc électrique créé à l'étape a) présente une tension électrique donnée.
- ledit procédé comprend en outre une étape e) dans laquelle on mesure ladite tension électrique de manière synchronisée avec ledit champ magnétique périodique.
- à l'étape e), on mesure ladite tension électrique donnée à des instants donnés, pendant lesquels ledit champ magnétique périodique est à un maximum ou à un minimum d'intensité.
- à l'étape a), ladite au moins une pièce métallique à souder est un tube, en particulier un tube revêtu servant au transport de produits pétrochimiques, ou est une partie d'un appareil à pression, notamment utilisable dans le domaine pétrochimique ou nucléaire.

Pour mettre en oeuvre le procédé de l'invention, on utilise un dispositif de soudage à l'arc TIG avec fil d'apport fusible, comprenant au moins une électrode non fusible comportant une extrémité libre pointant dans une direction donnée, un système guide-fil apte à et conçu pour guider au moins un fil fusible vers une zone de fusion située à proximité immédiate de ladite extrémité libre, ledit guide-fil étant agencé par rapport à ladite électrode non fusible de manière à ce que ledit fil fusible, dans ladite zone de fusion, forme un angle compris entre 5 et 50 degrés avec ladite direction donnée, caractérisé en ce qu'il comprend en outre une source de champ magnétique apte à et conçue pour délivrer un champ magnétique au voisinage de ladite extrémité libre.

La soudure est réalisé sur une configuration de type chanfrein étroit, c'est-à-dire typiquement entre 5 mm et 15 mm de largeur entre les bords ou extrémités à souder en fond de chanfrein, et une hauteur comprise entre 5 mm et 40 cm. Elle peut concerner une seule pièce, par exemple les deux bords longitudinaux d'une plaque métallique conformé en un tube, c'est-à-dire réalisé par enroulement d'un ruban, ou plusieurs pièces soudées l'une avec l'autre, typiquement deux extrémités de pièces mises bout à bout.

L'arc se développe entre l'extrémité de l'électrode non fusible et la ou les pièces à souder. Dans le procédé TIG classique, le fil fusible est guidé jusqu'à l'endroit où est réalisée la soudure, à proximité de la ou des pièces à souder. Il fond dans le bain de soudure et sa fusion alimente le bain.

Dans le procédé de soudage avec champ magnétique selon l'invention, le fil est guidé vers une zone de fusion qui n'est pas le bain de soudure. Cette zone est située à proximité immédiate de l'extrémité de l'électrode non fusible. Par « proximité immédiate », on veut dire que le fil, là où il fond, est plus proche de l'électrode que des pièces à souder. Selon un mode particulier, il frôle l'électrode non fusible, c'est-à-dire que l'extrémité du fil se situe à une distance de moins de 2 mm environ de l'électrode, ce qui constitue la zone de fusion dudit fil.

Le fil arrive dans la zone de fusion avec une incidence (angle entre la direction dans laquelle il pointe et la direction dans laquelle l'électrode pointe) comprise entre 5 et 50°, de préférence entre 10 et 30°. A 5°, il est presque parallèle à l'électrode, tandis qu'à 50°, il arrive en biais. La fusion se produit donc dans une zone extrêmement chaude de l'arc située à proximité de l'extrémité de l'électrode. Le métal fondu, issu de la fusion du fil, se transmet au bain de fusion situé au niveau de la soudure, c'est-à-dire dans le chanfrein étroit, par un dépôt continu de gouttelettes pouvant aller jusqu'à un pont liquide de métal en fusion.

L'avantage, notamment en chanfrein étroit, est qu'il n'est pas nécessaire de descendre le fil au fond du chanfrein. En revanche, il est essentiel de ne pas perturber l'arc, de manière à ce que la fusion du fil d'apport se passe correctement et que le métal fondu se transmette au bain de soudure.

Soumettre cet arc à un champ magnétique B selon le procédé de l'invention permet d'obtenir à la fois un déplacement de l'arc électrique dans l'espace et une fusion correcte du fil d'apport. Les particules chargées présentes dans l'arc sont soumises à la force de Lorentz, orthogonale à leur vitesse et au champ magnétique local.

Selon l'orientation du champ magnétique, il est ainsi possible de dévier l'arc dans n'importe quelle direction, par exemple latéralement par rapport à la ligne de soudure, ou bien longitudinalement, ou bien selon toutes les directions intermédiaires. Une déviation longitudinale en avant du point de soudure permet de préchauffer les pièces à souder. La déviation de l'arc est plus ou moins importante en fonction de l'intensité du champ magnétique.

Une déviation latérale produit un effet de balayage modulé par l'intensité du champ magnétique. On obtient alors une modification du cordon de soudure (déplacement, élargissement) sans avoir à modifier le système de guidage du fil ou à déplacer latéralement la torche de soudage.

Par ailleurs, le dispositif destiné à mettre en oeuvre le procédé de soudage selon l'invention peut comporter l'une ou plusieurs des caractéristiques suivantes :
- ladite source de champ magnétique est conçue pour délivrer un champ magnétique dont l'intensité maximale est comprise entre 8 et 50 gauss dans une zone d'arc à l'extrémité de l'électrode. A titre d'exemple, cette zone peut être définie comme l'ensemble des points de l'espace situés à moins de 3 mm d'un point situé à l'extérieur de ladite électrode non fusible et à 3 mm de ladite extrémité libre dans ladite direction donnée.
- ladite source de champ magnétique comprend au moins un solénoïde connecté électriquement à au moins une source de courant variable et au moins deux guides magnétiques aptes à et conçus pour guider un champ magnétique depuis ledit solénoïde vers ladite zone d'arc.
- lesdits guides magnétiques présentent chacun une extrémité située de part et d'autre de ladite direction donnée, chacune desdites extrémités se situant à une distance d'au plus 15 mm de ladite extrémité libre de ladite électrode non fusible.
- ladite source de courant possède un mode de fonctionnement dans lequel ledit courant est variable et de signe constant.
- le dispositif comprend un bras robotisé ou automatique.
- ladite électrode non fusible étant à un potentiel électrique donné, ledit dispositif comprend un moyen de mesure ou d'évaluation dudit potentiel électrique, ledit moyen de mesure ou d'évaluation étant synchronisé avec ladite source de champ magnétique.

Les meilleurs résultats sur le cordon de soudage sont obtenus lorsque le champ magnétique est variable (c'est-à-dire que son intensité, en tout point de l'espace, varie avec le temps) et que son intensité maximale est comprise entre 8 et 50 gauss à l'extrémité de l'électrode.

En effet, une intensité maximale du champ supérieure à 50 gauss dans cette zone d'arc provoque une perturbation de l'arc telle que la direction principale de l'arc ne permet plus une fusion du métal d'apport cohérente avec un soudage en fond de chanfrein.

Selon un mode particulier, le champ est créé par la circulation d'un courant dans un solénoïde. Le champ ainsi créé est guidé depuis le solénoïde jusqu'à la zone d'arc à l'aide d'au moins deux guides magnétiques. Ceux-ci ont une haute perméabilité magnétique ainsi qu'une faible hystérésis. Ils peuvent être réalisés en fer pur, avec addition éventuelle de terres rares.

D'une manière générale, les guides magnétiques doivent être disposés le plus près possible de l'arc à dévier, en général à une distance typiquement inférieure à 20 millimètres de l'extrémité de l'électrode.

Selon un mode particulier de réalisation, la source de courant alimentant le solénoïde est telle qu'elle peut délivrer, dans au moins un mode de fonctionnement, un courant d'intensité algébrique de signe constant pendant une certaine durée, correspondant typiquement à une passe de la torche de soudage.

Par intensité algébrique, on entend l'intensité du courant après qu'on a orienté le circuit d'alimentation du solénoïde.

Par signe constant, on veut dire que l'intensité est positive (+) ou nulle (0) pendant un temps donné, ou bien négative (-) ou nulle (0). L'arc est alors dévié dans un sens pendant une période où l'intensité algébrique du courant est positive ou nulle, alors qu'il est dévié en sens opposé lorsque l'intensité algébrique est négative ou nulle.

Le courant est en général périodique, si bien que l'on obtient des oscillations de l'arc d'un côté, ou bien de l'autre, permettant un déplacement et un élargissement du cordon de soudure.

En général, le dispositif de soudage comprend un bras robotisé portant la torche munie de l'électrode non fusible qui est alimentée avec le fil d'apport fusible, et dont la fonction est de déplacer la torche de soudage de façon à réaliser un ou plusieurs cordons de soudure.

Typiquement, selon le procédé de l'invention, on réalise plusieurs cordons successifs se superposant les uns aux autres jusqu'à remplissage total du chanfrein.

Le moyen de mesure du potentiel de l'électrode non fusible sert à obtenir la tension électrique de l'arc, les pièces à souder étant en général à la masse. La mesure ou l'évaluation du potentiel de l'électrode est équivalente à celle de la tension d'arc. Cette tension est très liée à la longueur de l'arc électrique. Ce moyen de mesure ou d'évaluation du potentiel permet donc de calculer cette longueur d'arc et de positionner l'électrode par rapport aux pièces à souder. Le moyen de mesure est typiquement un voltmètre. On parle de mesure ou d'évaluation, car l'obtention du potentiel de l'électrode ou de la tension d'arc peut être directe, par un voltmètre, ou indirecte, en mesurant un autre paramètre permettant de remonter à ce potentiel ou cette tension.

Plus précisément, en calculant la longueur d'arc quand celui-ci n'est pas dévié, on obtient la distance minimale entre l'extrémité libre de l'électrode et les pièces à souder, c'est-à-dire en général la hauteur de la torche. Lorsque l'arc est à son maximum de déviation, on obtient la distance entre l'extrémité de l'électrode et un bord du chanfrein étroit. Par triangulation, il alors possible de déterminer la position de l'extrémité libre de l'électrode par rapport aux pièces à souder.

En d'autres termes, selon le procédé de l'invention, on réalise un premier passage de la torche en déviant latéralement l'arc électrique, de sorte que le cordon vienne appuyer, dans le chanfrein étroit, sur le bord d'extrémité d'une des pièces à souder. Au passage de torche suivant, on dévie latéralement l'arc dans l'autre sens, de sorte que le cordon vienne appuyer sur l'extrémité de l'autre pièce à souder, de préférence tout en recouvrant tout ou partie du premier cordon réalisé pendant le premier passage. On répète ces deux étapes autant de fois que nécessaire, en particulier jusqu'à remplissage complet du chanfrein.

En effet, si le champ est créé par un solénoïde parcouru par un courant, à chaque passage correspond un signe constant de l'intensité algébrique du courant. Ce signe change d'un passage de la torche au passage suivant. Les propriétés de la soudure sont bien meilleures en « décroisant » ainsi les cordons dès que possible dans la configuration de soudage en joint étroit, plutôt qu'en faisant osciller l'arc d'un côté puis de l'autre en alternances rapprochées.

De façon alternative, pendant un même passage, on peut aussi faire osciller l'arc électrique unilatéralement, c'est-à-dire que la déviation se produit toujours du même côté et non alternativement d'un côté ou de l'autre du milieu de joint.

Dit autrement, pendant un passage, la déviation se produit d'un côté seulement et son amplitude oscille en fonction des oscillations du champ magnétique. Ceci a l'avantage d'élargir le cordon, tout en restant en configuration « décroisée » et améliore les propriétés de la soudure. Le courant parcourant le solénoïde varie donc en restant positif ou nul pendant un passage de la torche, puis en restant négatif ou nul pendant le passage suivant.

Les meilleurs résultats ont été obtenus avec une fréquence d'oscillation du champ magnétique comprise entre 0.5 et 300 hertz, de préférence entre 0.5 et 10 hertz (même chose pour le courant dans le solénoïde).

La mesure ou l'évaluation de la tension d'arc est faite de manière synchronisée avec la source de champ magnétique en ce sens que les instants auxquels on réalise la mesure sont choisis en fonction d'une propriété du champ magnétique. En général, on choisit des instants où le champ est soit très intense, soit très faible ou nul, de manière à avoir une vision représentative de l'amplitude de la déflection.

D'autres particularités et avantages apparaîtront à la lecture de la description ci-après, faite en référence aux figures dans lesquelles :
- la figure 1 représente un ensemble de deux pièces métalliques à souder formant un chanfrein étroit pouvant être soudé avec le procédé selon l'invention.
- la figure 2 représente ces deux pièces après qu'un certain nombre de cordons de soudure ont été déposés dans le chanfrein étroit par mise en oeuvre du procédé de l'invention.
- la figure 3 représente un dispositif de mise en oeuvre du procédé de soudage selon l'invention.
- la figure 4 représente un signal de courant alimentant le solénoïde 6a du dispositif de la figure 3 et dont la valeur algébrique est de signe constant (positif ici).
- la figure 5 représente le champ magnétique créé grâce au courant représenté en figure 4 et son effet sur l'arc électrique et le cordon de soudure.

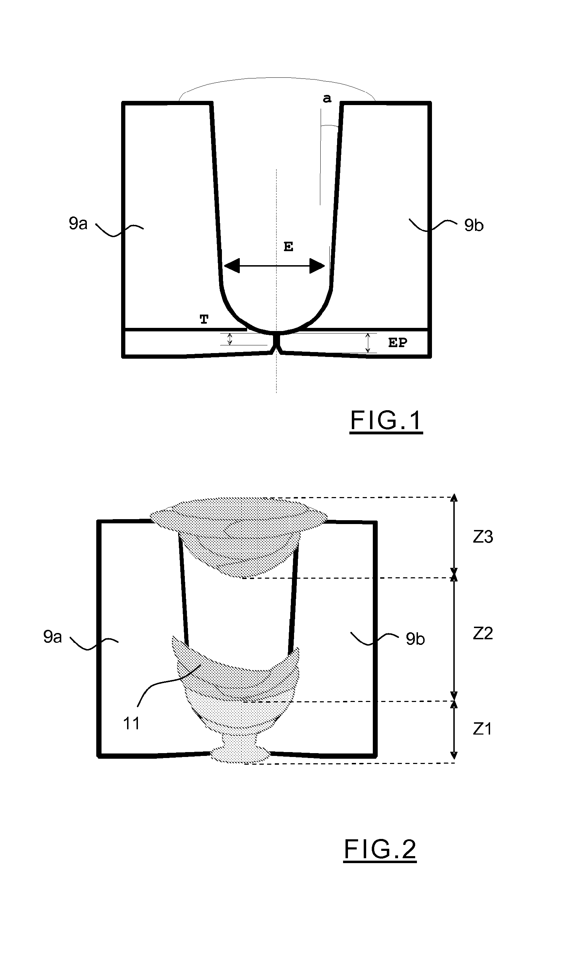

Sur la figure 1, les deux pièces métalliques 9a et 9b forment un chanfrein étroit. Pour un chanfrein étroit, la largeur en fond de chanfrein est généralement d'environ 7 à 10 mm et la hauteur est fonction de l'épaisseur à souder, c'est-à-dire de quelques millimètres à plusieurs dizaines de centimètres.

La figure 2 montre le même chanfrein, une soudure ayant été effectuée par dépôt de plusieurs cordons 11 successifs.

Dans la zone Z1, les cordons 11 se superposent à raison d'un cordon par couche. Dans la zone Z2, les cordons se superposent à raison d'au moins deux cordons par couche assurant une fusion successive des deux bords à assembler (sur la pièce 9a et sur la pièce 9b), selon une configuration « décroisée », c'est-à-dire que les cordons ne vont pas d'une pièce à l'autre, comme décrit ci-dessus.

La zone Z3 correspond à une zone de finition de la soudure dans laquelle il peut être nécessaire de faire trois cordons par couche.

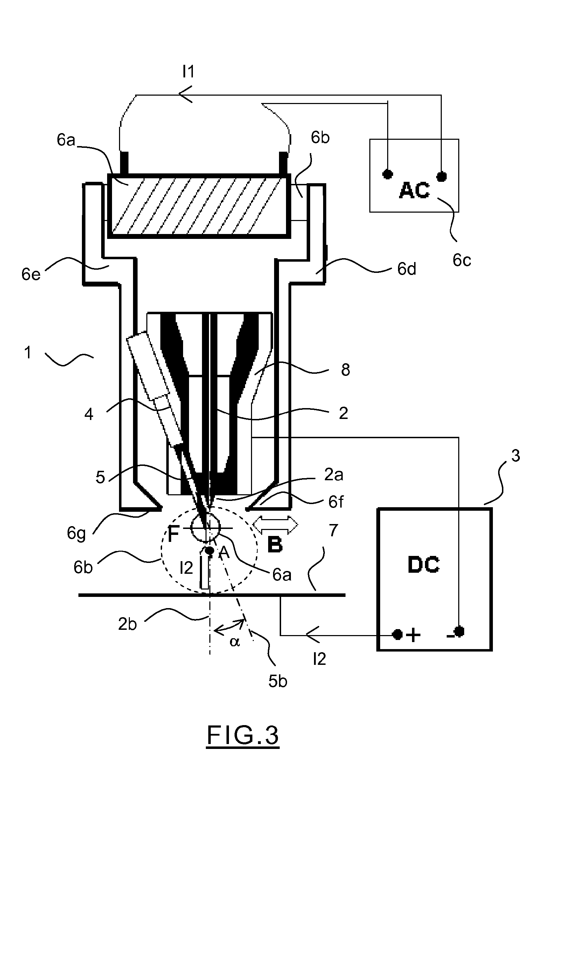

La figure 3 représente un dispositif 1 de mise en oeuvre du procédé selon l'invention. Dans l'axe de symétrie 2b se trouve une électrode de tungstène destinée à créer un arc 10 entre son extrémité libre 2a et les pièces à souder 7 ou le bain de métal fondu. Un guide-fil 4 est destiné à guider un fil 5 d'apport vers une zone 10a dite « de fusion », où le fil fond. Le métal fondu se transmet alors au bain de soudure sous forme de gouttelettes ou d'un pont liquide. Une buse 8, connectée fluidiquement à une source de gaz (non représentée), permet d'apporter un gaz d'inertage. Le guide-fil 4 traverse en général cette buse. Il est agencé de sorte que le fil 5 arrive dans la zone de fusion 10a selon une direction 5b faisant un angle a avec la direction 2b dans laquelle pointe l'électrode 2, α étant compris entre 5 et 50°, de préférence 10 à 30°. Une source de courant 3 permet de créer l'arc électrique.

Le dispositif comprend une source 6 de champ magnétique destinée à créer un champ magnétique B, en particulier dans une zone d'arc 10b dans laquelle l'arc électrique est susceptible de se développer. La source 6 de champ magnétique est apte à et conçue pour générer un champ magnétique B variable dans le temps, dont l'intensité maximum est comprise entre 8 et 50 gauss à l'extrémité de l'électrode.

La source comprend un solénoïde 6a connecté à une source 6c de courant I1. Le circuit d'alimentation du solénoïde 6a étant orienté au sens électrique du terme, I1 doit être comprise comme une intensité algébrique. Le solénoïde 6a, pourvu d'un noyau de fer doux 6b, permet de créer un champ magnétique bipolaire B. Le champ B est guidé depuis le solénoïde 6a vers la zone d'arc 10b grâce à deux guides magnétiques 6d et 6e en fer pur. Les guides sont agencés pour que leurs extrémités 6f et 6g se fassent face de part et d'autre de la zone d'arc 10b. L'ensemble 1 est porté par un bras robotisé ou automatisé (non représenté).

Les guides magnétiques 6d et 6e sont agencés pour que les lignes de champ dans la zone d'arc 10b soient sensiblement parallèles à la direction 7a de la soudure. Ainsi l'arc électrique est soumis à une force qui le dévie latéralement et perpendiculairement à l'axe du cordon (l'éloigne de la ligne médiane de la soudure).

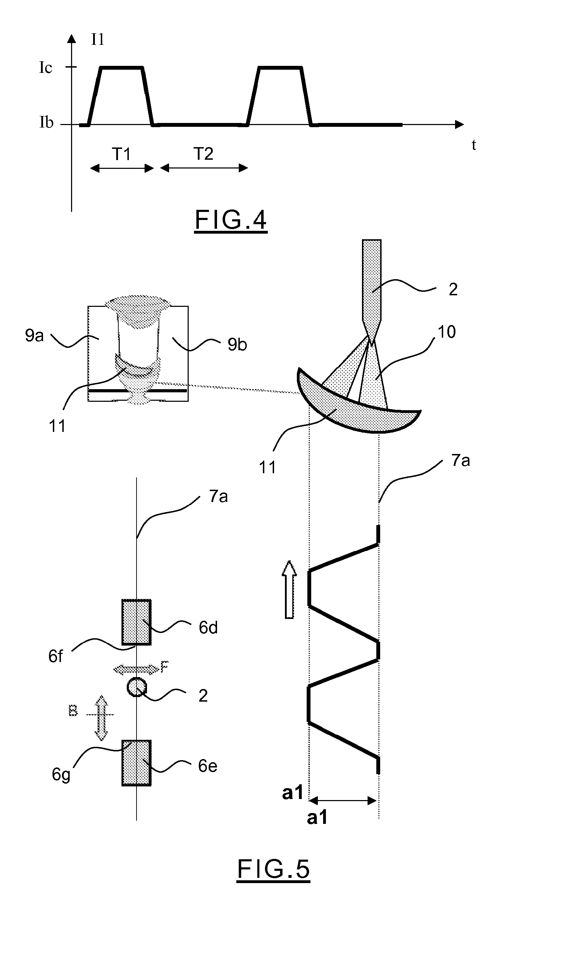

Sur la figure 4, on a représenté le courant d'alimentation I1 du solénoïde 6a durant l'exécution d'une passe de la torche de soudage conduisant à un cordon 11 de soudure. Ce courant est périodique et chaque période présente une intensité de crête Ic de 2.5A (ampère) et une intensité de base Ib de 0A. La durée T1 de la crête est de 300ms et la durée T2 de la base est également de 300ms. Selon un autre mode de réalisation, le courant pourrait osciller entre 0 et -2.5 A.

Sur la figure 5, on a représenté l'effet de ce courant Il. L'arc électrique 10 se développe entre l'électrode 2 et le bain de métal fondu qui devient après solidification le cordon de soudure 11. Le champ magnétique B est guidé dans la zone d'arc par les deux guides magnétiques 6d et 6e. Ce champ étant parallèle à la direction 7a de la soudure, les particules chargées de l'arc 10 subissent des forces de Lorentz dont on a représenté symboliquement la somme F (force de Laplace si l'on considère l'arc comme un conducteur). Ces forces dévient l'arc 10 d'un côté seulement. Les variations du courant I1 donc du champ B, dévient l'arc électrique 10 sur une distance a1 au niveau du bain de métal en fusion. Le cordon 11 résultant est plus large et s'appuie sur la pièce 9a. Au passage suivant, on procède de même, avec un courant Il négatif ou nul. L'arc 10 est dévié dans l'autre sens et on obtient un cordon 11 qui s'appuie sur la pièce 9b. En l'absence de champ magnétique, le cordon 11 serait déposé selon la ligne 7a et serait moins large.

La mesure de la tension d'arc est un indicateur consistant de la longueur de l'arc 10 et par conséquent de la distance électrode 2 - pièce à souder 7 et du positionnement de la torche 1. On synchronise la mesure de tension représentative de la longueur de l'arc 10 au courant I1 traversant le solénoïde et donc au champ magnétique B créé et à la déviation de l'arc 10. Il est ainsi possible lorsque le champ magnétique B est nul ou faible de déduire de la mesure de la tension d'arc 10 la distance entre la pièce 7 et l'électrode 2 dans l'axe de l'électrode 2b.

Dans une configuration de soudage à plat, cette distance serait représentative de la position verticale de la torche 1. Il est également possible de tirer profit de la déviation pour obtenir une information de position dans une deuxième dimension. La mesure de la tension d'arc lorsque l'arc 10 est dévié au maximum (intensité Ic parcourant le solénoïde 6a) est représentative de la position de l'électrode 2 dans l'axe de l'arc électrique dévié. La position de la torche 1 peut alors être asservie dans deux dimensions aux mesures de tensions d'arc synchronisées avec le courant I1 traversant le solénoïde 6a.

La ou les pièces à souder sont par exemple en acier ou en acier inoxydable.

## Revendications

1. Procédé de soudage à l'arc TIG avec fil (5) d'apport fusible, comprenant les étapes suivantes :
a) on crée un arc électrique (10) entre une électrode non fusible (2) ayant une extrémité libre (2a) et au moins une pièce métallique à souder (9a, 9b) ;
b) ladite extrémité libre (2a) pointant dans une direction donnée (2b), on guide au moins un fil fusible (5) vers une zone de fusion (10a) située à proximité immédiate de ladite extrémité libre (2a), ledit fil fusible (5) pénétrant dans ladite zone de fusion (10a) selon une direction (5b) formant avec ladite direction donnée (2b) un angle (α) compris entre 5 et 50° ; et
c) on déplace ladite électrode non fusible (2) et ledit fil fusible (5) de manière à opérer une fusion progressive du fil et à apporter ainsi du métal fondu au niveau du bain de fusion qui se solidifie en au moins un cordon de soudure (11),
**caractérisé en ce que** :
- ladite au moins une pièce métallique à souder (9a, 9b) présente un chanfrein étroit dans lequel est déposé le métal fondu en plusieurs passes successives, un cordon de soudure (11) étant formé durant chaque passe, et
- il comprend en outre une étape d) où l'on applique, pendant au moins une partie de l'étape c), un champ magnétique (B) audit arc électrique (10) de manière à dévier uniquement l'arc électrique (10).

2. Procédé selon la revendication 1, **caractérisé en ce que** :
- on répète l'étape c) de manière à réaliser plusieurs cordons de soudure (11) se superposant les uns aux autre ;
- durant chaque étape c), on maintient constant le signe de l'intensité algébrique dudit courant (I1) ; et
- on change le signe de l'intensité algébrique dudit courant (I1) d'une étape c) à la suivante.

3. Procédé selon l'une des revendications 1 ou 2, **caractérisé en ce que**, pendant une même passe, on fait osciller l'arc électrique unilatéralement dans le chanfrein en faisant varier cycliquement l'intensité du courant entre une valeur positive (+) ou négative (-), et une valeur nulle (0), de préférence on fait osciller l'arc électrique unilatéralement pour plusieurs passes réalisées en fond de chanfrein.

4. Procédé selon l'une quelconque des revendications 1 à 3, **caractérisé en ce que**, à l'étape d), ledit champ magnétique (B) est variable et possède une intensité maximale comprise entre 8 et 50 gauss à l'extrémité de l'électrode.

5. Procédé selon l'une quelconque des revendications 1 à 4, **caractérisé en ce que**, à l'étape d) :
- on alimente au moins un solénoïde (6a) par un courant (I1) de manière à créer ledit champ magnétique (B) ; et
- on guide ledit champ magnétique (B) depuis ledit solénoïde (6a) jusqu'au voisinage de ladite extrémité (2a) de l'électrode non fusible (2) à l'aide d'au moins deux guides magnétiques (6d, 6e).

6. Procédé selon l'une quelconque des revendications 1 à 5, **caractérisé en ce que** ledit courant (I1) d'alimentation dudit solénoïde (6a) est périodique de fréquence comprise entre 0.5 et 300 hertz.

7. Procédé selon l'une quelconque des revendications 1 à 6, **caractérisé en ce que** :
- ledit champ magnétique (B) appliqué durant l'étape d) est périodique ;
- ledit arc électrique (10) créé à l'étape a) présente une tension électrique donnée ; et
- ledit procédé comprend en outre une étape e) dans laquelle on mesure ladite tension électrique de manière synchronisée avec ledit champ magnétique (B) périodique.

8. Procédé selon l'une quelconque des revendications 1 à 7, **caractérisé en ce que**, à l'étape e), on mesure ladite tension électrique donnée à des instants pendant lesquels ledit champ magnétique (B) périodique est à un maximum ou à un minimum d'intensité.

9. Procédé selon l'une quelconque des revendications 1 à 8, **caractérisé en ce que**, la tension électrique mesurée est utilisée comme entrée dans l'asservissement du positionnement de l'électrode par rapport au joint à souder.

10. Procédé selon l'une quelconque des revendications 1 à 9, **caractérisé en ce que** le métal d'apport est un fil plein ou un fil fourré à poudre métallique.

11. Procédé selon l'une quelconque des revendications 1 à 10, **caractérisé en ce que** le chanfrein étroit a une largeur en fond de chanfrein comprise entre 5 et 15 mm, de préférence entre 7 et 10 mm, et la hauteur du chanfrein est comprise entre 5 mm et 40 cm, typiquement d'au moins 10 mm.

12. Procédé selon l'une quelconque des revendications 1 à 11, **caractérisé en ce que** le champ magnétique est généré par une source de champ magnétique comprenant au moins un solénoïde connecté électriquement à au moins une source de courant variable et au moins deux guides magnétiques aptes à et conçus pour guider le champ magnétique depuis ledit solénoïde vers ladite zone d'arc.

13. Procédé selon l'une quelconque des revendications 1 à 12, **caractérisé en ce qu'**on met en oeuvre des guides magnétiques présentant chacun une extrémité située de part et d'autre de ladite direction donnée, chacune desdites extrémités se situant à une distance d'au plus 15 mm de l'extrémité libre de l'électrode non fusible.

14. Procédé selon l'une quelconque des revendications 1 à 13, **caractérisé en ce que**, pendant une passe de soudage donnée, la déviation se produit d'un côté seulement du chanfrein et son amplitude oscille en fonction des oscillations du champ magnétique.

15. Procédé selon l'une quelconque des revendications 1 à 14, **caractérisé en ce que** la ou les pièces à souder sont en acier ou en acier inoxydable.

## Revendications modifiées

### Revendications modifiées conformément à la règle 137(2) CBE.

**1.** Procédé de soudage à l'arc TIG avec fil (5) d'apport fusible, comprenant les étapes suivantes :
a) on crée un arc électrique (10) entre une électrode non fusible (2) ayant une extrémité libre (2a) et au moins une pièce métallique à souder (9a, 9b) ;
b) ladite extrémité libre (2a) pointant dans une direction donnée (2b), on guide au moins un fil fusible (5) vers une zone de fusion (10a) située à proximité immédiate de ladite extrémité libre (2a), ledit fil fusible (5) pénétrant dans ladite zone de fusion (10a) selon une direction (5b) formant avec ladite direction donnée (2b) un angle (α) compris entre 5 et 50° ; et
c) on déplace ladite électrode non fusible (2) et ledit fil fusible (5) de manière à opérer une fusion progressive du fil et à apporter ainsi du métal fondu au niveau du bain de fusion qui se solidifie en au moins un cordon de soudure (11),
**caractérisé en ce que** :
- ladite au moins une pièce métallique à souder (9a, 9b) présente un chanfrein étroit dans lequel est déposé le métal fondu en plusieurs passes successives, un cordon de soudure (11) étant formé durant chaque passe, et
- il comprend en outre une étape d) où l'on applique, pendant au moins une partie de l'étape c), un champ magnétique (B) audit arc électrique (10) de manière à dévier uniquement l'arc électrique (10) et, pendant une même passe, on fait osciller l'arc électrique unilatéralement dans le chanfrein en faisant varier cycliquement l'intensité du courant entre une valeur positive (+) ou négative (-), et une valeur nulle (0),

**2.** Procédé selon la revendication 1, **caractérisé en ce que** :
- on répète l'étape c) de manière à réaliser plusieurs cordons de soudure (11) se superposant les uns aux autre ;
- durant chaque étape c), on maintient constant le signe de l'intensité algébrique dudit courant (I1) ; et
- on change le signe de l'intensité algébrique dudit courant (I1) d'une étape c) à la suivante.

**3.** Procédé selon l'une des revendications 1 ou 2, **caractérisé en ce qu'**on fait osciller l'arc électrique unilatéralement pour plusieurs passes réalisées en fond de chanfrein.

**4.** Procédé selon l'une quelconque des revendications 1 à 3, **caractérisé en ce que**, à l'étape d), ledit champ magnétique (B) est variable et possède une intensité maximale comprise entre 8 et 50 gauss à l'extrémité de l'électrode.

**5.** Procédé selon l'une quelconque des revendications 1 à 4, **caractérisé en ce que**, à l'étape d) :
a. on alimente au moins un solénoïde (6a) par un courant (I1) de manière à créer ledit champ magnétique (B) ; et
b. on guide ledit champ magnétique (B) depuis ledit solénoïde (6a) jusqu'au voisinage de ladite extrémité (2a) de l'électrode non fusible (2) à l'aide d'au moins deux guides magnétiques (6d, 6e).

**6.** Procédé selon l'une quelconque des revendications 1 à 5, **caractérisé en ce que** ledit courant (I1) d'alimentation dudit solénoïde (6a) est périodique de fréquence comprise entre 0.5 et 300 hertz.

**7.** Procédé selon l'une quelconque des revendications 1 à 6, **caractérisé en ce que** :
- ledit champ magnétique (B) appliqué durant l'étape d) est périodique ;
- ledit arc électrique (10) créé à l'étape a) présente une tension électrique donnée ; et
- ledit procédé comprend en outre une étape e) dans laquelle on mesure ladite tension électrique de manière synchronisée avec ledit champ magnétique (B) périodique.

**8.** Procédé selon l'une quelconque des revendications 1 à 7, **caractérisé en ce que**, à l'étape e), on mesure ladite tension électrique donnée à des instants pendant lesquels ledit champ magnétique (B) périodique est à un maximum ou à un minimum d'intensité.

**9.** Procédé selon l'une quelconque des revendications 1 à 8, **caractérisé en ce que**, la tension électrique mesurée est utilisée comme entrée dans l'asservissement du positionnement de l'électrode par rapport au joint à souder.

**10.** Procédé selon l'une quelconque des revendications 1 à 9, **caractérisé en ce que** le métal d'apport est un fil plein ou un fil fourré à poudre métallique.

**11.** Procédé selon l'une quelconque des revendications 1 à 10, **caractérisé en ce que** le chanfrein étroit a une largeur en fond de chanfrein comprise entre 5 et 15 mm, de préférence entre 7 et 10 mm, et la hauteur du chanfrein est comprise entre 5 mm et 40 cm, typiquement d'au moins 10 mm.

**12.** Procédé selon l'une quelconque des revendications 1 à 11, **caractérisé en ce que** le champ magnétique est généré par une source de champ magnétique comprenant au moins un solénoïde connecté électriquement à au moins une source de courant variable et au moins deux guides magnétiques aptes à et conçus pour guider le champ magnétique depuis ledit solénoïde vers ladite zone d'arc.

**13.** Procédé selon l'une quelconque des revendications 1 à 12, **caractérisé en ce qu'**on met en oeuvre des guides magnétiques présentant chacun une extrémité située de part et d'autre de ladite direction donnée, chacune desdites extrémités se situant à une distance d'au plus 15 mm de l'extrémité libre de l'électrode non fusible.

**14.** Procédé selon l'une quelconque des revendications 1 à 13, **caractérisé en ce que**, pendant une passe de soudage donnée, la déviation se produit d'un côté seulement du chanfrein et son amplitude oscille en fonction des oscillations du champ magnétique.

**15.** Procédé selon l'une quelconque des revendications 1 à 14, **caractérisé en ce que** la ou les pièces à souder sont en acier ou en acier inoxydable.
